# EUROPEAN PATENT SPECIFICATION

(11) **EP 2 453 684 B1**
(45) Date of publication and mention of the grant of the patent: **27.02.2019**
(21) Application number: 10796676.4
(22) Date of filing: 14.05.2010
(51) Int. Cl.: H04W 12/04, H04L 29/06, H04W 36/00

(54) **SECURITY KEY PROCESSING METHOD, DEVICE AND SYSTEM FOR RADIO RESOURCE CONTROL (RRC) CONNECTION RE-ESTABLISHING**
VERFAHREN, VORRICHTUNG UND SYSTEM ZUR VERARBEITUNG VON SICHERHEITSSCHLÜSSELN ZUR WIEDERHERSTELLUNG VON FUNKRESSOURCENSTEUERUNGS (RRC)-VERBINDUNGEN
PROCÉDÉ, DISPOSITIF ET SYSTÈME DE TRAITEMENT DE CLÉ DE SÉCURITÉ, POUR LE RÉTABLISSEMENT DE LA CONNEXION DE CONTRÔLE DE RESSOURCES RADIO (RRC)

(30) Priority: 09.07.2009 CN 200910158958
(43) Date of publication of application: 16.05.2012
(73) Proprietor: ZTE Corporation, Shenzhen, Guangdong 518057 (CN)
(72) Inventor: LI, Jinglan, Guangdong 518057 (CN)
(74) Representative: Deambrogi, Edgardo
(86) International application number: PCT/CN2010/072816
(87) International publication number: WO 2011/003299

(56) References cited:
- EP-A1- 1 915 022
- EP-A1- 1 973 265
- WO-A2-2008/054320
- WO-A2-2009/020789
- CN-A- 101 257 723
- CN-A- 101 453 732
- "3rd Generation Partnership Project; Technical Specification Group Services and System Aspects; 3GPP System Architecture Evolution (SAE): Security architecture; (Release 9)", 3GPP STANDARD; 3GPP TS 33.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 1 June 2009 (2009-06-01), pages 1-99, XP050376849,
- "LTE; Evolved Universal Terrestrial Radio Access (E-UTRA); Radio Resource Control (RRC); Protocol specification (3GPP TS 36.331 version 8.5.0 Release 8)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ts_136331v080500p.pdf, no. V8.5.0, 1 April 2009 (2009-04-01), XP014044235,

## Description

### Field of the Invention

The present invention relates to the mobile communication security field, and in particular to a method, an apparatus and a system for processing a security key when reestablishing a Radio Resource Control (RRC) connection.

### Background of the Invention

In the Long Term Evolution (LTE) system, the RRC function of the network is carried out in an eNB (E-UTRAN Node B, Evolved Universal Terrestrial Radio Access Network Node B), and therefore the security protection mechanism corresponding to the RRC also is in the eNB. Because of the large number, wide distribution area and high decentralization (no matter from the geographical position or the logic) of various network entities among the access layer of the eNB deployments, the operators being incapable of carrying out the centralized control of security to them and each eNB being in a non-secure area, every eNB each needs to generate, by itself, a key used for the access layer security mechanism between them and every UE (User Equipment).

According to the description of the 33.401 protocol, during the process of initial context establishment initiated by MME (Mobility Management Entity, which is an entity of the core network), the MME carries an access layer (AS) root key K_{eNB} within the initial context establishment request information to the eNB, and the eNB then generates three keys, AS layer signaling integrity protection key K_{RrcInt}, signaling encryption key K_{RrcEnc} and user data encryption key K_{UpEnc}, by using Key Derivation Function (KDF) according to the K_{eNB}.

In general, K_{eNB} does not change. Only when a handover occurs or the RRC connection is reestablished does the eNB need to generate a new AS layer root key K*_{eNB} according to a new NH (Next Hop, which is provided by the core network) value or the current access layer root key K_{eNB} (when there is no the new NH), Target Physical Cell ID (PCI) and Target Physical Cell Downlink Frequency (EARFCN-DL), and then to generate the three keys used for the AS layer integrity protection and encryption by using the KDF according to the K*_{eNB}.

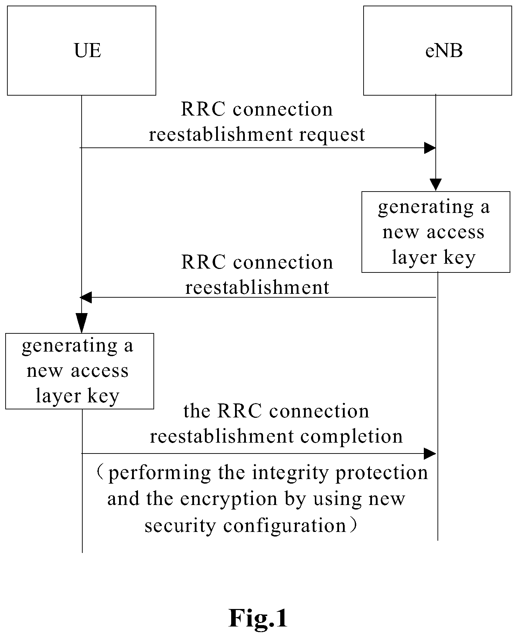

In the conventional art, the process of processing the RRC connection reestablishment is shown as Fig. 1.

When the UE initiates an RRC connection reestablishment request no matter under what circumstance, the eNB, after receiving the RRC connection reestablishment request, needs to generate a new access layer root key K*_{eNB} by invoking the KDF process according to the NH value saved locally or the K_{eNB}, the PCI and the EARFCN-DL which are used currently, then carries a corresponding next hop chaining count (Next Hop Chaining Count, which is provided by the core network and corresponds to the NH and the K_{eNB} one by one, and the value range thereof is 0-7) value to the UE through RRC connection reestablishment information, and the UE determines according to the next hop chaining count value to generate a new access layer root key K*_{eNB} by using the new NH (when the next hop chaining count value is greater than the next hop chaining count value saved locally, the new NH is used) or the K_{eNB} (when the next hop chaining count value is equal to the next hop chaining count value saved locally, the current K_{eNB} is used).

In the LTE, each eNB maintains respectively the access layer security key between the eNB itself and the UE. Therefore when an X2 interface or an S1 interface handover occurs, of course the access layer key also needs to change subsequently due to the change of the eNB. However, in the conventional art, there is such a problem in the method for processing the security key when the RRC connection is reestablished: when the RRC connection reestablishment on the present eNB occurs, under the circumstance that no change occurs in the eNB and in the UE and no security problem occurs (for example: the key is intercepted by an attacker, the examination of integrity protection fails and the shared root key K_{ASME} between the core network and the UE expires, and these circumstances occur), in fact, there is no need to update the access layer security key shared between the eNB and the UE and it can not affect the security of the access layer. If the key update is all performed once regardless of the situation, the amount of the computation (once key update needs four times of KDF processes respectively) at the eNB side and at the UE side and the time delay of the entire LTE system will be greatly increased.

WO 2009020789 A2 discloses a method, device and system for establishing security context. 3GPP TS 36.331, version 8.5.0, Release 8 discloses LTE, Evolved universal terrestrial Radio Access, Radio Resource Control.

### Summary of the Invention

The invention is defined by the appended claims.

The present invention is proposed aiming at the above problem in the conventional art that the key update is performed regardless of the situation, for this purpose, the main object of the present invention is to provide a method for processing a security key when RRC connection is reestablished, so as to perform the key update aiming at various situations.

In order to achieve the above object, according to an aspect of the present invention, a method for processing a security key when a Radio Resource Control connection is reestablished is provided, which comprises the following steps: receiving a Radio Resource Control connection reestablishment request from a user equipment by a node B; the node B judging whether there is a need to generate a new access layer security key, and generating the new access layer security key or using an original access layer security key based on this judgment result; and sending corresponding Radio Resource Control connection reestablishment information to the user equipment by the node B, so that the user equipment carries out the connection reestablishment.

Preferably, the step of the node B judging whether there is a need to generate a new access layer security key, and generating the new access layer security key or using an original access layer security key based on this judgment result comprises: judging that the node B is a target node B, with a cell in the target node B where the Radio Resource Control connection reestablishment will occur being a cell where the handover occurred, and then determining that there is no need to generate a new access layer key; and the node B using an access layer key obtained during the handover as an access layer key for the current reestablishment, and performing a local configuration by using a security configuration existing when the handover occurs.

Preferably, the step of the node B judging whether there is a need to generate a new access layer security key, and generating the new access layer security key or using an original access layer security key based on this judgment result comprises: judging that the node B is a target node B, with the target node B being a node B after an X2 handover and the cell in the target node B where the Radio Resource Control connection reestablishment will occur not being the cell where the handover occurred and then determining to generate a new access layer key; and the target node B selecting a key K*_{eNB} corresponding to a cell where the Radio Resource Control connection is reestablished from a key list which is carried in a handover request message and used for reestablishing the Radio Resource Control connection, and using the selected key as an access layer root key K_{eNB} when the Radio Resource Control connection is reestablished.

Preferably, the step of the node B judging whether there is a need to generate a new access layer security key, and generating the new access layer security key or using an original access layer security key based on this judgment result comprises: judging that the node B is a target node B, with the target node B being a node B after an S1 handover and the cell in the target node B where the Radio Resource Control connection reestablishment will occur not being the cell where the handover occurred and then determining to generate a new access layer key; and the target node B generating the new access layer key according to {NH, NCC} in a handover request message, and using the access layer key as an access layer security key when the RRC connection is reestablished.

Preferably, the step of the node B judging whether there is a need to generate a new access layer security key, and generating the new access layer security key or using an original access layer security key based on this judgment result comprises: judging that the node B is a source node B, with no security problem existing in the source node B and a next hop chaining count value saved locally not being 0, and then determining that there is no need to generate a new access layer key; and the node B performing a local configuration by using a previous security configuration.

Preferably, the step of the node B judging whether there is a need to generate a new access layer security key, and generating the new access layer security key or using an original access layer security key based on this judgment result comprises: judging that the node B is a source node B, with a security problem existing in the source node B or a next hop chaining count value saved locally being 0, and then determining to generate a new access layer key; and the node B invoking a Key Derivation Function (KDF) by using a current K_{eNB} or new NH, PCI and EARFCN-DL, and generating a new access layer root key K*_{eNB}, and then saving a next hop chaining count value corresponding to the K*_{eNB} to the local and saving the K*_{eNB} as the K_{eNB} when the Radio Resource Control connection is reestablished to the local.

Preferably, after the node B sending corresponding Radio Resource Control connection reestablishment information to the user equipment, the method further comprises: receiving the Radio Resource Control connection reestablishment information from the node B by the user equipment; and the user equipment generating corresponding Radio Resource Control connection reestablishment completion information according to the Radio Resource Control connection reestablishment information received from the node B, and sending the Radio Resource Control connection reestablishment completion information to the node B.

Preferably, before the user equipment receiving the Radio Resource Control connection reestablishment information from the node B, the method further comprises: the user equipment judging, according to a comparison result between the next hop chaining count value contained in the received Radio Resource Control connection reestablishment information and the next hop chaining count value locally saved by the user equipment, whether there is a need to correspondingly generate a new access layer security key which is identical to that at the node B side, performing the local configuration, and generating the corresponding Radio Resource Control connection reestablishment completion information.

Preferably, if a node ID corresponding to a physical cell ID carried in the Radio Resource Control connection reestablishment request is identical to the ID of the node B, the node B being a source node B, wherein the source node B is the node B connected with the user equipment before the user equipment sends the Radio Resource Control connection reestablishment request; and if the node ID corresponding to the physical cell ID carried in the Radio Resource Control connection reestablishment request is not identical to the ID of the node B, the node B being a target node B, wherein the target node B is the node B which has completed the X2 handover or S1 handover after receiving the Radio Resource Control connection reestablishment request information.

A node B is provided according to another aspect of the present invention, which apparatus comprises: a receiving module configured for the node B to receive a Radio Resource Control connection reestablishment request from a user equipment; a first judging module configured for the node B to judge whether there is a need to generate a new access layer security key, and to generate the new access layer security key or use an original access layer security key based on this judgment result; and a sending module configured for the node B to send corresponding Radio Resource Control connection reestablishment information to the user equipment, so that the user equipment carries out the connection reestablishment.

Preferably, the apparatus further comprises: a second judging module configured for the node B to judge that the node B itself is a source node B or a target node B according to whether a node ID corresponding to a physical cell ID carried in the received Radio Resource Control connection reestablishment request is identical to the ID of the node B.

According to further another aspect of the present invention, a system for processing a security key when a Radio Resource Control connection is reestablished is provided, which comprises: all technical characteristics of the above node B and user equipment.

The present invention adopts a method that different processing is to implement for an access layer security key according to the different situations occurred by the RRC connection reestablishment, and the method adds the judgment step into the process of generating an access layer security key, thus solving the problem in the conventional method that a new key is generated regardless of the situation, thereby saving a large number of computation process of generating the key and reducing the time delay of the systems.

Other characteristics and advantages of the present invention will be explained in the following description, and moreover, partly become obvious from the description, or be understood by implementing the present invention. The objects and other advantages of the present invention can be realized and obtained through the structures specially indicated in the description, claims and drawings.

### Brief Description of the Drawings

The drawings herein are used to provide a further understanding of the present invention and form a part of the description, which are used to explain the present invention together with the embodiments of the present invention without unduly limiting the scope of the present invention. In the drawings:
Fig. 1 is a flowchart of processing an access layer security key when RRC connection is reestablished in the conventional art;
Fig. 2 is a flowchart of a method for processing an access layer security key when RRC connection is reestablished according to an embodiment of the present invention;
Fig. 3 is a flowchart of a preferred method for processing an access layer security key when RRC connection is reestablished according to an embodiment of the present invention;
Fig. 4 is a specific application flowchart of a method for processing an access layer security key when RRC connection is reestablished according to an embodiment of the present invention;
Fig. 5 is a specific application flowchart of a method for processing an access layer security key when RRC connection is reestablished according to an embodiment of the present invention;
Fig. 6 is a specific application flowchart of a method for processing an access layer security key when RRC connection is reestablished according to an embodiment of the present invention;
Fig. 7 is a structural block diagram of an apparatus for processing an access layer security key when RRC connection located in a node B side is reestablished according to an embodiment of the present invention; and
Fig. 8 is a preferred structural block diagram of an apparatus for processing an access layer security key when RRC connection is reestablished according to an embodiment of the present invention.

### Detailed Description of Embodiments

A detailed description is given to the preferred embodiments of the invention with reference to the accompanying drawings. The preferred embodiment of the present invention is described for the purpose of illustration, not for limiting the present invention.

### Functional Overview

Considering the problem in the conventional LTE that keys are updated regardless of situations, thereby greatly increasing the amount of computation at the eNB side and at the UE side (once of key update needs four times of KDF processes respectively) and the time delay of the entire LTE system, the embodiments of the present invention provide a solution to process security keys when an RRC connection is reestablished. When the RRC connection is reestablished, the eNB side adds a judgment step after receiving an RRC connection reestablishment request from the UE: if the RRC connection reestablishment request is at the source eNB side and caused by a non-security problem, and a next hop chaining count value locally saved by the eNB is not 0, then the access layer key update will not be performed; if the RRC connection reestablishment request is at the target eNB side and in a cell where a handover occurs, then the access layer key generated during the handover is used. According to the method proposed by the present invention for processing the access layer key when the RRC connection is reestablished, the eNB and the UE only need to add a judgment step when the RRC connection reestablishment occurs, which can save a large number of computation process of generating the keys, can significantly reduce the loads of the eNB and the UE, and can be very beneficial especially for the UE with the limited computation capability; moreover, which can reduce the time delay of systems and improve the connection speed of the RRC connection reestablishment.

### Method Embodiments

A method for processing a security key when an RRC connection is reestablished is provided according to an embodiment of the present invention.

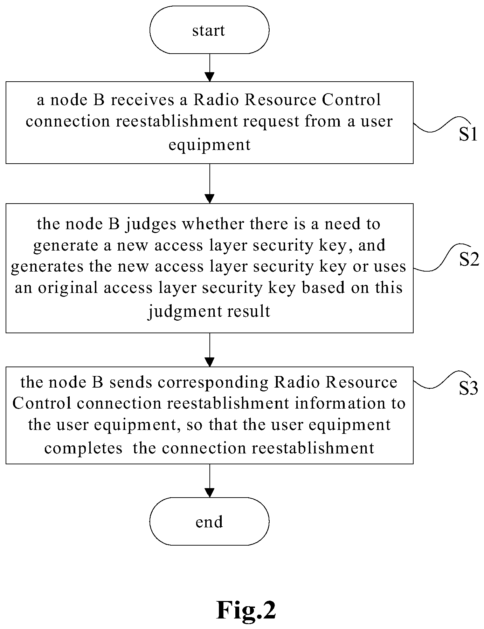

Fig. 2 is a flowchart of a method for processing an access layer security key when RRC connection is reestablished according to an embodiment of the present invention.

As shown in Fig. 2, the method comprises the following Step S1 to Step S3.
Step S1, a node B receives a Radio Resource Control connection reestablishment request from a user equipment;
Step S2, the node B judges whether there is a need to generate a new access layer security key, and generates the new access layer security key or using an original access layer security key based on this judgment result; and
Step S3, the node B sends corresponding Radio Resource Control connection reestablishment information to the user equipment, so that the user equipment completes the connection reestablishment.

The present invention judges, during the establishment of the Radio Resource Control (RRC) connection between the User Equipment (UE) and the node B, whether there is a need to generate the access layer key, and then executes the update of the access layer key, by which whether to perform the key update is distinguished according to different situations. This method saves the system resources and improves the operational efficiency of systems, without affecting the security of the access layer. This method is particularly applied after the node B end has received the RRC connection reestablishment request. If at this moment, the node B end and the user equipment have not changed and there is no security problem, then at this moment the access layer security key will not need to be updated.

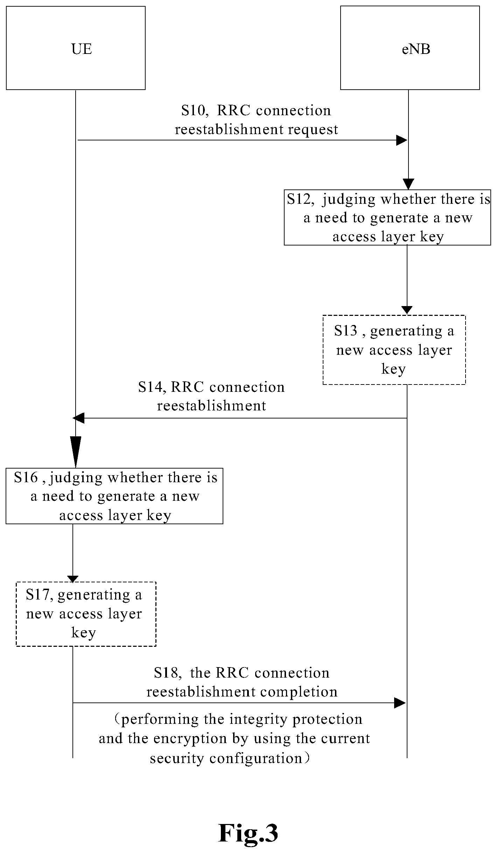

Fig. 3 is a flowchart of a preferred method for processing an access layer security key when RRC connection is reestablished according to an embodiment of the present invention. As shown in Fig. 3, the method comprises the following Step S10 to Step S18.
Step S10, the eNB receives an RRC connection reestablishment request from the UE;
Step S12, the eNB judges whether there is a need to generate a new access layer security key;
Step S14, the eNB sends corresponding RRC connection reestablishment information to the UE;
Step S16, the UE judges, according to the received RRC connection reestablishment information, whether there is a need to generate a new access layer security key which is identical to that of the eNB, then performs local configuration, and further generates corresponding RRC connection reestablishment completion information; and
Step S18, the UE sends the generated RRC connection reestablishment completion information to the eNB.

In above steps, when performing the Step S12, the eNB judges whether the eNB is a source eNB or a target eNB, wherein if the eNB is a source eNB, the reason that the RRC connection reestablishment request occurs is a non-security problem and a next hop chaining count value saved locally is not 0, a new access layer security key will not need to be generated; if the eNB is a target eNB and a cell in the eNB where the Radio Resource Control connection reestablishment will occur is a cell where the handover occurred, a new access layer security key will not need to be generated either.

If in the Step S12 it is determined that the eNB is a source eNB and the reason that the RRC connection reestablishment request occurs is a security problem or a next hop chaining count value saved locally is 0, or it is determined that the eNB is a target eNB and the cell in the target eNB where the Radio Resource Control connection reestablishment will occur is not the cell where the handover occurred, a new access layer security key will need to be generated, and at this moment the Step S13 will need to be executed.

In above steps, in the Step S16, the UE judges, according to a comparison result between the next hop chaining count value contained in the received RRC connection reestablishment information and the next hop chaining count value locally saved by the UE, whether there is a need to generate a new access layer security key which is identical to that of the eNB side.

If in the Step S16 it is determined that there is a need to generate a new access layer security key which is identical to that of the eNB side, then at this moment the Step S17 will need to be executed, and the UE will generate the new access layer security key which is identical to that of the eNB side according to the information contained in the RRC connection reestablishment information from the eNB side.

In above steps, the Step S13 and the Step S17 are to generate a new access layer key.

It should be noted that under the circumstance that the cell in the target eNB where the Radio Resource Control connection reestablishment will occur is the cell where the handover occurred, although the target eNB does not need to generate a new security key, the UE generates a new security key according to the connection reestablishment information (at this moment, the NCC contained in the information is the NCC corresponding to the key generated during the eNB performs the handover).

In the present embodiment, the eNB end judges whether there is a need to generate a new access layer security key, by which whether to generate new security key can be selected according to different implementing circumstances, and therefore, under the circumstance that the key does not need to be updated, the amount of computation in the eNB side and in the user equipment side is greatly reduced and the system resources are saved.

A detailed description with reference to Figs. 3-5 is given hereinafter to the specific application of a method for processing an access layer security key when RRC connection is reestablished according to an embodiment of the present invention.

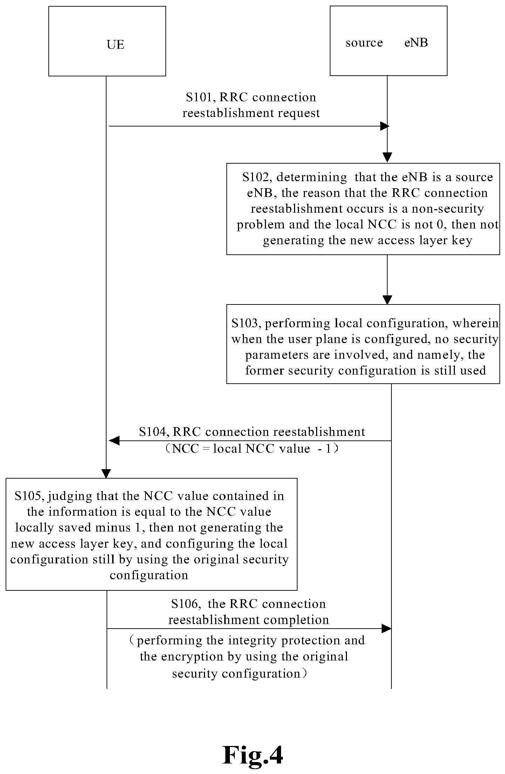

Fig. 4 is a specific application flowchart of a method for processing an access layer security key when RRC connection is reestablished according to an embodiment of the present invention. In the present embodiment, the UE sends an RRC connection reestablishment request to a source eNB connected previously by the UE, a next hop chaining count value locally saved is not 0, and the reason that the RRC connection reestablishment occurs is a non-security problem, then the access layer security key will not need to be updated in this condition, specific process of which is shown as Fig. 4. The process comprises the following steps.
Step 101, the UE sends RRC connection reestablishment request information to the eNB;
Step 102, after receiving the RRC connection reestablishment request information, the eNB determines, according to the physical cell ID contained in the information, that the eNB is a source eNB connected by the UE before the UE sent the RRC connection reestablishment information (at this moment, the ID of the current eNB is consistent with the node ID corresponding to the physical cell ID carried in the RRC connection reestablishment request), determines that the reason, contained in the information, that the RRC connection reestablishment occurs is a non-security problem, and determines that the next hop chaining count value locally saved by the eNB is not 0. Then the new access layer security key will not need to be generated;
Step 103, the eNB performs local configuration, wherein when the user plane of the eNB is configured, no security parameters are involved, and namely, the former security configuration is still used;
Step 104, the eNB creates RRC connection reestablishment information, wherein the next hop chaining count value locally saved minus 1 is assigned to the next hop chaining count value in the RRC connection reestablishment information, and then sends this information to the UE;
Step 105, the UE, after receiving the RRC connection reestablishment information, compares the next hop chaining count value contained in the information with the next hop chaining count value locally saved by it. And if the next hop chaining count value contained in the information is equal to the next hop chaining count value locally saved minus 1, which means that the security parameters have not changed, and at this moment, the UE performs the local configuration according to the RRC connection reestablishment information without changing the security configuration; and
Step 106, the UE creates the RRC connection reestablishment completion information, and sends it to the eNB after it has been performed the integrity protection and encryption by using the original security configuration; the eNB receives the RRC connection reestablishment completion information from the UE, and then the process of the RRC connection reestablishment ends.

The present embodiment, under the circumstance that the eNB side is the source node B, after the eNB receives the RRC connection reestablishment request, judges that no security problem exists in the node B and the local NCC is not 0, at this moment the key will not need to be updated and the former security configuration can be used, thereby greatly reducing the amount of computation at the source eNB side and at the user equipment side and saving the system resources. It can distinguish different implementing circumstances to select whether to generate the new security key.

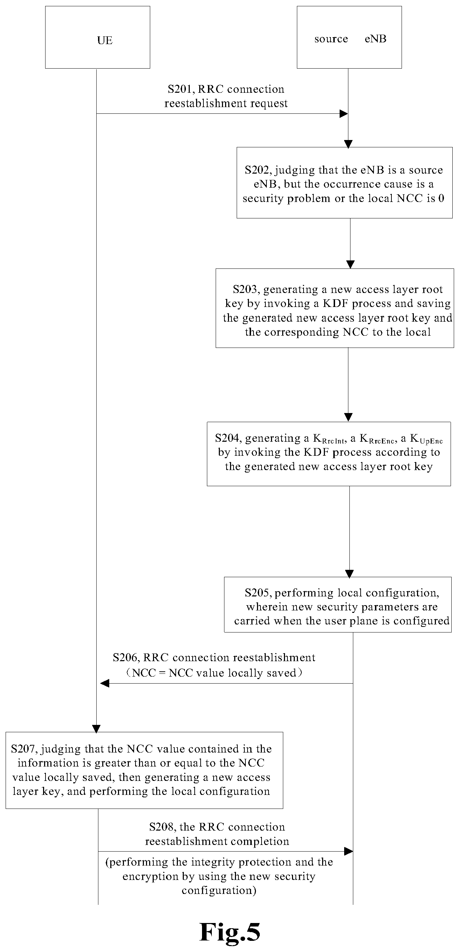

Fig. 5 is a specific application flowchart of a method for processing an access layer security key when RRC connection is reestablished according to an embodiment of the present invention. In the present embodiment, firstly it also needs to be determined that the UE has sent an RRC connection reestablishment request to a source eNB connected previously by the UE, but the reason that the RRC connection reestablishment occurs contained in the information is a security problem or a next hop chaining count value locally saved by the eNB is 0; then there is a need to update the access layer security key at this moment. The particular steps are shown as Fig. 5 and comprise the following steps.
Step 201, the UE sends the RRC connection reestablishment request information to the eNB;
Step 202, the eNB, after receiving the RRC connection reestablishment request information, judges, according to the physical cell ID contained in the RRC connection reestablishment information, that the eNB is a source eNB which is connected before sending the RRC connection reestablishment information, but wherein the reason that the RRC connection reestablishment occurs contained in the information is a security problem or a next hop chaining count value locally saved by the eNB is 0;
Step 203, the eNB generates a new access layer root key K*_{eNB} by invoking a KDF process, saves the next hop chaining count value corresponding to the K*_{eNB} to the local, and then saves the K*_{eNB} to the local as an access layer root key K_{eNB} of reestablishing the RRC connection;
Step 204, the eNB invokes the KDF according to the K_{eNB}, and then generates a K_{RrcInt}, a K_{RrcEnc} and a K_{UpEnc};
Step 205, the eNB performs local configuration, wherein new security parameters are carried when the eNB user plane is configured;
Step 206, the eNB creates RRC connection reestablishment information, wherein the next hop chaining count value locally saved is assigned to the next hop chaining count value contained in the RRC connection reestablishment information, and then the information is sent to the UE;
Step 207, the UE, after receiving the RRC connection reestablishment information, compares the next hop chaining count value contained in the information with the next hop chaining count value locally saved by it, and if the next hop chaining count value contained in the information is greater than or equal to the next hop chaining count value locally saved, which indicates that the security parameters have changed, at this moment, the UE will generate a new access layer key according to a new NH value or the current K_{eNB}, and the UE performs the local configuration according to the RRC connection reestablishment information and the newly generated security parameters; and
Step 208, the UE creates the RRC connection reestablishment completion information and sends it to the eNB after it has been performed the integrity protection and encryption by using the new security configuration; the eNB receives the RRC connection reestablishment completion information from the UE, and then the process of the RRC connection reestablishment ends.

The present embodiment, under the circumstance that the eNB side is the source node B, after the eNB receives the RRC connection reestablishment request, judges that the security problem exists in the node B and the local NCC is 0, therefore the key needs to be updated and the KDF process is invoked according to the generated new access layer key, and the security configuration parameters are carried when the user plane is configured. The method distinguishes different implementing circumstances to select whether to generate the new security key.

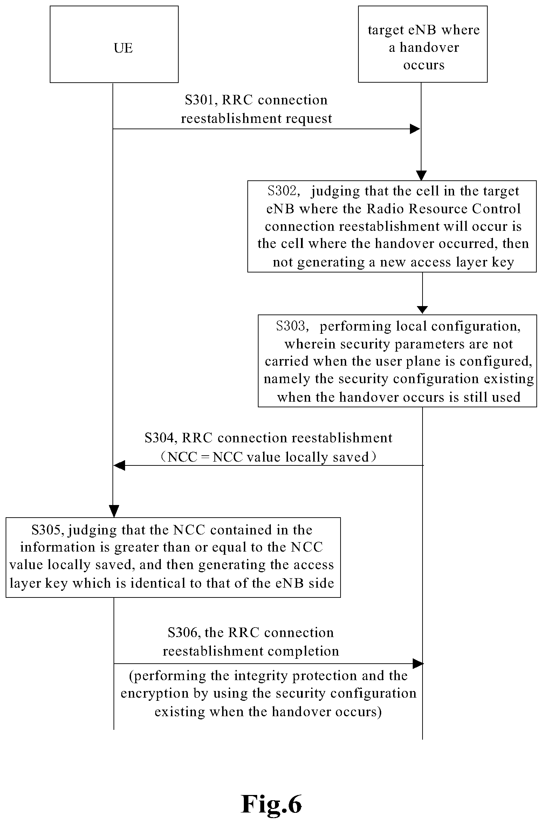

Fig. 6 is a specific application flowchart of a method for processing an access layer security key when RRC connection is reestablished according to an embodiment of the present invention. In the present embodiment, an X2 or S1 handover occurs in the eNB, and the target eNB receives the RRC connection reestablishment request from the UE side, wherein it should be noted that the reason that the UE sends the connection reestablishment request to the eNB is that the target eNB sends reconfiguration information to the UE side through the source eNB when performing the handover, which make the UE side perform reconfiguration for itself according to the new configuration existing after the handover occurs, so as to generate a set of local configuration which is identical to that of the target eNB side. However, if the reconfiguration fails, it may be possible for the UE to send the connection reestablishment request to the target eNB.

When the system determines that the current cell in the eNB is a cell where the handover occurred the access layer security key of reestablishing the RRC connection uses the key generated during the handover. The particular process is shown as Fig. 6 and comprises the following steps.
Step 301, the UE sends the RRC connection reestablishment request information to the eNB;
Step 302, the eNB, after receiving the RRC connection reestablishment information, judges that itself is a target eNB and the cell in the eNB where the Radio Resource Control connection reestablishment will occur is the cell where the handover occurred according to the physical cell ID contained in the RRC connection reestablishment information;
Step 303, the eNB performs local configuration, wherein security parameters are not carried when the eNB user plane is configured, namely the security configuration existing when the handover occurs is still used;
Step 304, the eNB creates RRC connection reestablishment information, wherein the next hop chaining count value locally saved is assigned to the next hop chaining count value in the RRC connection reestablishment information, and then sends the RRC connection reestablishment information to the UE;
Step 305, the UE, after receiving the RRC connection reestablishment information, compares the next hop chaining count value contained in the RRC connection reestablishment information with the next hop chaining count value locally saved by it. And if the next hop chaining count value contained in the RRC connection reestablishment information is greater than or equal to the next hop chaining count value locally saved (because the reconfiguration information sent to the UE during the handover does not work), the UE will generate a access layer key which is identical to that of the eNB side according to a new NH value or the current K_{eNB}, and thereby the UE performs the local configuration according to the RRC connection reestablishment information and the generated security parameters; and
Step 306, the UE creates the RRC connection reestablishment completion information and sends it to the eNB after it has been performed the integrity protection and encryption by using the new security configuration; the eNB receives the RRC connection reestablishment completion information from the UE, and then the process of the RRC connection reestablishment ends.

The present embodiment, under the circumstance that the eNB side is the target node B, after the eNB receives the RRC connection reestablishment request, judges whether the cell in the node B where the Radio Resource Control connection reestablishment will occur is the cell where the handover occurred, wherein under the circumstance that the cell in the node B where the Radio Resource Control connection reestablishment will occur is the cell where the handover occurred, the key does not need to be updated, and when the user plane is configured, no new security configuration parameters need to be carried and the original security configuration is used. The method distinguishes different implementing circumstances to select whether to generate the new security key.

It should be noted that if the eNB judges according to the physical cell ID carried within the received RRC connection reestablishment information that itself is a target eNB where the handover occurs but the cell in the target eNB where the Radio Resource Control connection reestablishment will occur is the cell where the handover occurred, then the new access layer security key needs to be generated at this moment. In this case, in the embodiment of the present invention, if the X2 handover occurs in the eNB, the node B will select a key K*_{eNB} corresponding to a cell where the RRC connection is reestablished from a key list which is carried in a handover request message and used for reestablishing the Radio Resource Control (RRC) connection, use the selected key as an access layer root key K_{eNB} when the Radio Resource Control connection is reestablished, and save the access layer root key together with the Next Hop Chaining Count (NCC) value corresponding thereto to the local; but if the S1 handover occurs in the eNB, the new access layer key will be generated as the access layer security key of reestablishing the RRC connection by using the {NH, NCC} pair within the handover request according to the method for generating the key. Thereby, the eNB invokes the KDF according to the K_{eNB} and generates the K_{RrcInt}, K_{RrcEnc} and K_{UpEnc}, and then the eNB creates the RRC connection reestablishment information, wherein the NCC value locally saved is assigned to the NCC value contained within the RRC connection reestablishment information, and sends the information to the UE. The follow-up steps are identical to the above Steps 207-208.

### Apparatus Embodiment

According to an embodiment of the present invention, a node B is further provided.

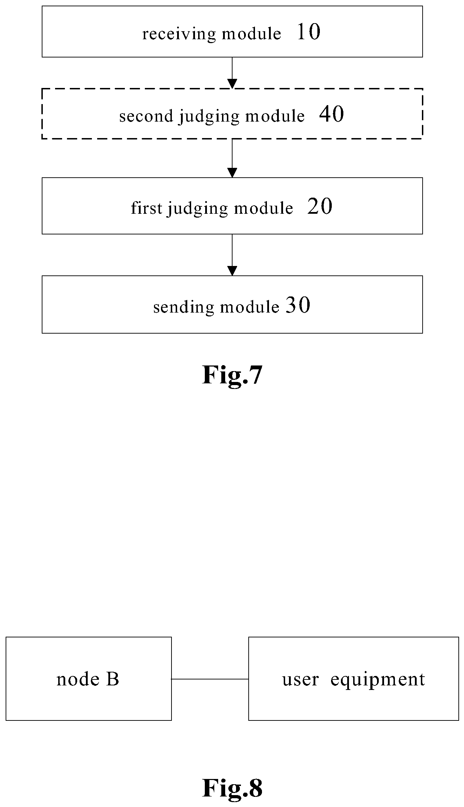

Fig. 7 is a structural block diagram of the apparatus. As shown in Fig. 7, the apparatus comprises: a receiving module 10, a first judging module 20 and a sending module 30.

In the apparatus, the receiving module 10 is configured for the node B to receive a Radio Resource Control connection reestablishment request from user equipment (which is configured to execute the function of the Step S10);
the first judging module 20 is configured for the node B to judge whether there is a need to generate a new access layer security key, and to generate the new access layer security key or to use an original access layer security key based on this judgment result (which is configured to execute the function of the Step S12 and the Step S13); and
the sending module 30 is configured for the node B to send corresponding Radio Resource Control connection reestablishment information to the user equipment, so that the user equipment carries out the connection reestablishment (which is configured to execute the function of the Step S14).

Preferably, the apparatus further comprises: a second judging module 40, configured for the node B to judge that the node B itself is a source node or is a target node according to whether a node ID corresponding to a physical cell ID carried in the received Radio Resource Control connection reestablishment request is identical to the ID of the node B.

In above apparatus, the first judging module 20 judges, according to the RRC connection reestablishment request received by the receiving module 10, whether the eNB is a source eNB or a target eNB, wherein if the eNB is a source eNB, the reason that the RRC connection reestablishment request occurs is a non-security problem and a next hop chaining count value saved locally is not 0, a new access layer security key will not need to be generated; if the eNB is a target eNB and the cell in the eNB where the Radio Resource Control connection reestablishment will occur is the cell where the handover occurred, a new access layer security key will not need to be generated neither.

If the first judging module **20** determines that the reason that the RRC connection reestablishment request occurs is a security problem or a next hop chaining count value saved locally is 0, or the cell in the target eNB where the Radio Resource Control connection reestablishment will occur is not the cell where the handover occurred, a new access layer security key will need to be generated at this time.

According to the embodiment of the present invention, a system for processing a security key when RRC connection is reestablished is provided. Fig. 8 illustrates a structural block diagram of the system. As shown in Fig. 8, the system comprises: all technical characteristics about the above node B and the user equipment.

Above description is only to illustrate the preferred embodiments but not to limit the present invention. Various alterations and changes to the present invention are apparent to those skilled in the art. The scope of the invention is solely defined by the appended claims.

## Claims

1. A method for processing a security key when a Radio Resource Control connection is reestablished, comprising the following steps of:
receiving (S1) a Radio Resource Control connection reestablishment request from a user equipment by a node B;
the node B judging (S2) whether there is a need to generate a new access layer security key shared between the eNB and the UE, and generating (S2) the new access layer security key or using an original access layer security key based on this judgment result; and
sending (S3) corresponding Radio Resource Control connection reestablishment information to the user equipment by the node B, so that the user equipment carries out the connection reestablishment,
wherein
the step (S2) of the node B judging whether there is a need to generate a new access layer security key, and generating the new access layer security key or using an original access layer security key based on this judgment result comprises:
judging that the node B is a target node B, with a cell in the target node B where the Radio Resource Control connection reestablishment will occur being a cell where a handover occurred, and then determining that there is no need to generate a new access layer key; and
the node B using an access layer key obtained during the handover as an access layer key for the current reestablishment, and performing a local configuration by using a security configuration existing when the handover occurs;
or
judging that the node B is a target node B, with the target node B being a node B after an X2 handover and the cell in the target node B where the Radio Resource Control connection reestablishment will occur not being the cell where the handover occurred, and then determining to generate a new access layer key; and
the target node B selecting a key K*_{eNB} corresponding to a cell where the Radio Resource Control connection is reestablished from a key list which is carried in a handover request message and used for reestablishing the Radio Resource Control connection, and using the selected key as an access layer root key K_{eNB} when the Radio Resource Control connection is reestablished;
or
judging that the node B is a target node B, with the target node B being a node B after an S1 handover and the cell in the target node B where the Radio Resource Control connection reestablishment will occur not being the cell where the handover occurred, and then determining to generate a new access layer key; and
the target node B generating the new access layer key according to { Next Hop NH, Next Hop Chaining Count NCC } in a handover request message, and using the access layer key as an access layer security key when the Radio Resource Control, RRC, connection is reestablished; or
judging that the node B is a source node B, with no security problem existing in the source node B and a next hop chaining count value saved locally not being 0, and then determining that there is no need to generate a new access layer key; and
the node B performing local configuration by using a previous security configuration;
or
judging that the node B is a source node B, with a security problem existing in the source node B or a next hop chaining count value saved locally being 0, and then determining to generate a new access layer key; and
the node B invoking a Key Derivation Function, KDF, by using a current K_{eNB} or new Next Hop, NH, Target Physical Cell ID, PCI, and Target Physical Cell Downlink Frequency, EARFCN-DL, and generating a new access layer root key K*_{eNB}, and then saving a next hop chaining count value corresponding to the K*_{eNB} to the local and saving the K*_{eNB} as the K_{eNB} when the Radio Resource Control connection is reestablished to the local.

2. The method for processing the security key when the Radio Resource Control connection is reestablished according to Claim 1, **characterized in that** after the node B sending (S3) corresponding Radio Resource Control connection reestablishment information to the user equipment, the method further comprises:
receiving the Radio Resource Control connection reestablishment information from the node B by the user equipment; and
the user equipment generating corresponding Radio Resource Control connection reestablishment completion information according to the Radio Resource Control connection reestablishment information received from the node B, and sending the Radio Resource Control connection reestablishment completion information to the node B.

3. The method for processing the security key when the Radio Resource Control connection is reestablished according to Claim 2, **characterized in that** before the user equipment receiving the Radio Resource Control connection reestablishment information from the node B, the method further comprises:
the user equipment judging, according to a comparison result between the next hop chaining count value contained in the received Radio Resource Control connection reestablishment information and the next hop chaining count value locally saved by the user equipment, whether there is a need to correspondingly generate a new access layer security key which is identical to that at the node B side, performing the local configuration, and generating the corresponding Radio Resource Control connection reestablishment completion information.

4. The method for processing a security key when the Radio Resource Control connection is reestablished according to Claim 1, **characterized in that** the method further comprises:
if a node ID corresponding to a physical cell ID carried in the Radio Resource Control connection reestablishment request is identical to the ID of the node B, the node B being a source node B, wherein the source node B is the node B connected with the user equipment before the user equipment sends the Radio Resource Control connection reestablishment request; and
if the node ID corresponding to the physical cell ID carried in the Radio Resource Control connection reestablishment request is not identical to the ID of the node B, the node B being a target node B, wherein the target node B is the node B which has completed the X2 handover or S1 handover after receiving the Radio Resource Control connection reestablishment request information.

5. An apparatus for processing a security key when a Radio Resource Control connection is reestablished, comprising:
a receiving module (10) configured for a node B to receive a Radio Resource Control connection reestablishment request from a user equipment;
a first judging module (20) configured for the node B to judge whether there is a need to generate a new access layer security key shared between the eNB and the UE, and to generate the new access layer security key or use an original access layer security key based on this judgment result; and
a sending module (30) configured for the node B to send corresponding Radio Resource Control connection reestablishment information to the user equipment, so that the user equipment carries out the connection reestablishment,
wherein the first judging module (20) is further configured to judge that the node B is a target node B, with a cell in the target node B where the Radio Resource Control connection reestablishment will occur being a cell where a handover occurred, and then determine that there is no need to generate a new access layer key; and the node B using an access layer key obtained during the handover as an access layer key for the current reestablishment, and performing a local configuration by using a security configuration existing when the handover occurs;
or
wherein the first judging module (20) is further configured to judge that the node B is a target node B, with the target node B being a node B after an X2 handover and the cell in the target node B where the Radio Resource Control connection reestablishment will occur not being the cell where the handover occurred, and then determine to generate a new access layer key; and select a key K*_{eNB} corresponding to a cell where the Radio Resource Control connection is reestablished from a key list which is carried in a handover request message and used for reestablishing the Radio Resource Control connection, and use the selected key as an access layer root key KeNB when the Radio Resource Control connection is reestablished;
or
wherein the first judging module (20) is further configured to judge that the node B is a target node B, with the target node B being a node B after an S1 handover and the cell in the target node B where the Radio Resource Control connection reestablishment will occur not being the cell where the handover occurred, and then determine to generate a new access layer key; and generate the new access layer key according to {Next Hop NH, Next Hop Chaining Count NCC} in a handover request message, and use the access layer key as an access layer security key when the Radio Resource Control, RRC, connection is reestablished;
or
wherein the first judging module (20) is further configured to judge that the node B is a source node B, with no security problem existing in the source node B and a next hop chaining count value saved locally not being 0, and then determine that there is no need to generate a new access layer key; and perform local configuration by using a previous security configuration;
or
wherein the first judging module (20) is further configured to judge that the node B is a source node B, with a security problem existing in the source node B or a next hop chaining count value saved locally being 0, and then determining to generate a new access layer key; and invoke a Key Derivation Function, KDF, by using a current KeNB or new Next Hop, NH, Target Physical Cell ID, PCI, and Target Physical Cell Downlink Frequency, EARFCN-DL, and generate a new access layer root key K*_{eNB}, and then save a next hop chaining count value corresponding to the K*_{eNB} to the local and save the K*_{eNB} as the KeNB when the Radio Resource Control connection is reestablished to the local.

6. The apparatus for processing a security key when the Radio Resource Control connection is reestablished according to Claim 5, **characterized in that** the apparatus further comprises:
a second judging module (40) configured for the node B to judge that the node B itself is a source node B or a target node B according to whether a node ID corresponding to a physical cell ID carried in the received Radio Resource Control connection reestablishment request is identical to the ID of the node B.

7. A system for processing a security key when a Radio Resource Control connection is reestablished, comprising the apparatus as claimed in Claim 5 or 6 and a user equipment.

## Patentansprüche

1. Verfahren zum Verarbeiten eines Sicherheitsschlüssels, wenn eine Funkressourcensteuerungs (Radio Resource Control, RRC)-Verbindung wiederhergestellt wird, umfassend die folgenden Schritte:
Empfangen (S1) einer Anforderung zur Wiederherstellung einer Funkressourcensteuerungsverbindung von einem Benutzergerät (User Equipment, UE) durch einen Knoten B (eNB);
Beurteilen (S2), ob ein neuer Zugriffsschichtsicherheitsschlüssel erzeugt werden muss, der gemeinsam von dem eNB und dem UE genutzt wird, und Erzeugen (S2) des neuen Zugriffsschichtsicherheitsschlüssels oder Verwenden eines ursprünglichen Zugriffsschichtsicherheitsschlüssels auf der Grundlage dieses Beurteilungsergebnisses durch den Knoten B; und
Senden (S3) entsprechender Informationen zur Wiederherstellung der Funkressourcensteuerungsverbindung an das Benutzergerät durch den Knoten B, sodass das Benutzergerät die Wiederherstellung der Verbindung ausführt,
wobei
der Schritt (S2) des Knotens B zum Beurteilen, ob ein neuer Zugriffsschichtsicherheitsschlüssel erzeugt werden muss, und zum Erzeugen des neuen Zugriffsschichtsicherheitsschlüssels oder Verwenden eines ursprünglichen Zugriffsschichtsicherheitsschlüssels auf der Grundlage dieses Beurteilungsergebnisses umfasst:
Beurteilen, dass der Knoten B ein Zielknoten B ist, wobei eine Zelle im Zielknoten B, in der die Wiederherstellung der Funkressourcensteuerungsverbindung stattfinden wird, eine Zelle ist, in der eine Übergabe stattfand, und anschließend Entscheiden, dass kein neuer Zugriffsschichtschlüssel erzeugt werden muss; und
Verwenden eines Zugriffsschichtschlüssels, der während der Übergabe als Zugriffsschichtschlüssel für die aktuelle Wiederherstellung erhalten wurde, und Durchführen einer lokalen Konfiguration unter Verwendung einer während der Übergabe vorliegenden Sicherheitskonfiguration durch den Knoten B;
oder
Beurteilen, dass der Knoten B ein Zielknoten B ist, wobei der Zielknoten B ein Knoten B nach einer X2-Übergabe ist und die Zelle im Zielknoten B, in der die Wiederherstellung der Funkressourcensteuerungsverbindung stattfinden wird, nicht die Zelle ist, in der die Übergabe stattfand, und anschließend Entscheiden, einen neuen Zugriffsschichtschlüssel zu erzeugen; und
Auswählen eines Schlüssels K*_{eNB}, der einer Zelle entspricht, in der die Funkressourcensteuerungsverbindung wiederhergestellt wird, aus einer Schlüsselliste, die in einer Übergabeanforderungsnachricht transportiert und zum Wiederherstellen der Funkressourcensteuerungsverbindung verwendet wird, und Verwenden des ausgewählten Schlüssels als Zugriffsschichtstammschlüssel K_{eNB}, wenn die Funkressourcensteuerungsverbindung wiederhergestellt wird, durch den Zielknoten B;
oder
Beurteilen, dass der Knoten B ein Zielknoten B ist, wobei der Zielknoten B ein Knoten B nach einer S1-Übergabe ist und die Zelle im Zielknoten B, in der die Wiederherstellung der Funkressourcensteuerungsverbindung stattfinden wird, nicht die Zelle ist, in der die Übergabe stattfand, und anschließend Entscheiden, einen neuen Zugriffsschichtschlüssel zu erzeugen; und
Erzeugen des neuen Zugriffsschichtschlüssels gemäß {Next Hop (NH), Next Hop Chaining Count (NCC)} in einer Übergabeanforderungsnachricht und Verwenden des Zugriffsschichtschlüssels als Zugriffsschichtsicherheitsschlüssel, wenn die Funkressourcensteuerungsverbindung (RRC-Verbindung) wiederhergestellt wird, durch den Zielknoten B;
oder
Beurteilen, dass der Knoten B ein Quellknoten B ist, wobei im Quellknoten B kein Sicherheitsproblem vorliegt und ein lokal gespeicherter Next-Hop-Chaining-Count-Wert nicht 0 ist, und anschließend Entscheiden, dass kein neuer Zugriffsschichtschlüssel erzeugt werden muss; und
Durchführen einer lokalen Konfiguration unter Verwendung einer vorherigen Sicherheitskonfiguration durch den Knoten B;
oder
Beurteilen, dass der Knoten B ein Quellknoten B ist, wobei ein Sicherheitsproblem im Quellknoten B vorliegt oder ein lokal gespeicherter Next-Hop-Chaining-Count-Wert 0 ist, und anschließend Entscheiden, einen neuen Zugriffsschichtschlüssel zu erzeugen; und
Aufrufen einer Schlüsselableitungsfunktion (Key Derivation Function, KDF), indem ein aktueller K_{eNB} oder ein neuer Next Hop (NH), eine ID einer physikalischen Zielzelle (Physical Cell ID, PCI) und eine Downlink-Frequenz der physikalischen Zielzelle (EARFCN-DL) verwendet wird, und Erzeugen eines neuen Zugriffsschichtstammschlüssels K*_{eNB} und anschließend lokales Speichern eines Next-Hop-Chaining-Count-Werts, der dem K*_{eNB} entspricht, und Speichern des K*_{eNB} als K_{eNB}, wenn die Funkressourcensteuerungsverbindung lokal wiederhergestellt wird, durch den Knoten B.

2. Verfahren zum Verarbeiten des Sicherheitsschlüssels, wenn die Funkressourcensteuerungsverbindung wiederhergestellt wird, nach Anspruch 1, **dadurch gekennzeichnet, dass** das Verfahren, nachdem der Knoten B die entsprechenden Informationen zur Wiederherstellung der Funkressourcensteuerungsverbindung an das Benutzergerät gesendet hat (S3), ferner umfasst:
Empfangen der Informationen zur Wiederherstellung der Funkressourcensteuerungsverbindung vom Knoten B durch das Benutzergerät; und
Erzeugen entsprechender Informationen über den Abschluss der Wiederherstellung der Funkressourcensteuerungsverbindung gemäß den vom Knoten B empfangenen Informationen zur Wiederherstellung der Funkressourcensteuerungsverbindung und Senden der Informationen über den Abschluss der Wiederherstellung der Funkressourcensteuerungsverbindung an den Knoten B durch das Benutzergerät.

3. Verfahren zum Verarbeiten des Sicherheitsschlüssels, wenn die Funkressourcensteuerungsverbindung wiederhergestellt wird, nach Anspruch 2, **dadurch gekennzeichnet, dass** das Verfahren, bevor das Benutzergerät die Informationen zur Wiederherstellung der Funkressourcensteuerungsverbindung vom Knoten B empfängt, ferner umfasst:
entsprechend einem Vergleichsergebnis zwischen dem Next-Hop-Chaining-Count-Wert, der in den empfangenen Informationen zur Wiederherstellung der Funkressourcensteuerungsverbindung enthalten ist, und dem Next-Hop-Chaining-Count-Wert, der von dem Benutzergerät lokal gespeichert wurde, Beurteilen, ob dementsprechend ein neuer Zugriffsschichtsicherheitsschlüssel erzeugt werden muss, der mit dem auf der Seite des Knotens B identisch ist, Durchführen der lokalen Konfiguration und Erzeugen der entsprechenden Informationen über den Abschluss der Wiederherstellung der Funkressourcensteuerungsverbindung durch das Benutzergerät.

4. Verfahren zum Verarbeiten eines Sicherheitsschlüssels, wenn die Funkressourcensteuerungsverbindung wieder hergestellt wird, nach Anspruch 1, **dadurch gekennzeichnet, dass** das Verfahren ferner umfasst:
wenn eine Knoten-ID, die einer in der Anforderung zur Wiederherstellung einer Funkressourcensteuerungsverbindung transportierten ID einer physikalischen Zelle entspricht, mit der ID des Knotens B identisch ist, es sich bei dem Knoten B um einen Quellknoten B handelt, wobei der Quellknoten B der mit dem Benutzergerät verbundene Knoten B ist, bevor das Benutzergerät die Anforderung zur Wiederherstellung einer Funkressourcensteuerungsverbindung sendet; und
wenn die Knoten-ID, die der in der Anforderung zur Wiederherstellung einer Funkressourcensteuerungsverbindung transportierten ID einer physikalischen Zelle entspricht, nicht mit der ID des Knotens B identisch ist, es sich bei dem Knoten B um einen Zielknoten B handelt, wobei der Zielknoten B der Knoten B ist, der die X2-Übergabe oder S 1-Übergabe abgeschlossen hat, nachdem die Anforderungsinformationen zur Wiederherstellung der Funkressourcensteuerung empfangen wurden.

5. Vorrichtung zum Verarbeiten eines Sicherheitsschlüssels, wenn eine Funkressourcensteuerungsverbindung wiederhergestellt wird, umfassend:
ein Empfangsmodul (10), das so konfiguriert ist, dass ein Knoten B eine Anforderung zur Wiederherstellung einer Funkressourcensteuerungsverbindung von einem Benutzergerät empfängt;
ein erstes Beurteilungsmodul (20), das so konfiguriert ist, dass der Knoten B beurteilt, ob ein neuer Zugriffsschichtsicherheitsschlüssel erzeugt werden muss, der gemeinsam von dem eNB und dem UE genutzt wird, und den neuen Zugriffsschichtsicherheitsschlüssel erzeugt oder auf der Grundlage dieses Beurteilungsergebnisses einen ursprünglichen Zugriffsschichtsicherheitsschlüssel verwendet; und
ein Sendemodul (30), das so konfiguriert ist, dass der Knoten B entsprechende Informationen zur Wiederherstellung der Funkressourcensteuerungsverbindung an das Benutzergerät sendet, sodass das Benutzergerät die Wiederherstellung der Verbindung ausführt,
wobei das erste Beurteilungsmodul (20) ferner konfiguriert ist, um zu beurteilen, dass der Knoten B ein Zielknoten B ist, wobei eine Zelle im Zielknoten B, in der die Wiederherstellung der Funkressourcensteuerungsverbindung stattfinden wird, eine Zelle ist, in der eine Übergabe stattfand, und anschließend zu entscheiden, dass kein neuer Zugriffsschichtschlüssel erzeugt werden muss; und wobei der Knoten B einen Zugriffsschichtschlüssel verwendet, der während der Übergabe als Zugriffsschichtschlüssel für die aktuelle Wiederherstellung erhalten wurde, und eine lokale Konfiguration unter Verwendung einer während der Übergabe vorliegenden Sicherheitskonfiguration durchführt;
oder
wobei das erste Beurteilungsmodul (20) ferner konfiguriert ist, um zu beurteilen, dass der Knoten B ein Zielknoten B ist, wobei der Zielknoten B ein Knoten B nach einer X2-Übergabe ist und die Zelle im Zielknoten B, in der die Wiederherstellung der Funkressourcensteuerungsverbindung stattfinden wird, nicht die Zelle ist, in der die Übergabe stattfand, und anschließend zu entscheiden, einen neuen Zugriffsschichtschlüssel zu erzeugen; und einen Schlüssel K*_{eNB}, der einer Zelle entspricht, in der die Funkressourcensteuerungsverbindung wiederhergestellt wird, aus einer Schlüsselliste auszuwählen, die in einer Übergabeanforderungsnachricht transportiert und zum Wiederherstellen der Funkressourcensteuerungsverbindung verwendet wird, und den ausgewählten Schlüssel als Zugriffsschichtstammschlüssel KeNB zu verwenden, wenn die Funkressourcensteuerungsverbindung wiederhergestellt wird;
oder
wobei das erste Beurteilungsmodul (20) ferner konfiguriert ist, um zu beurteilen, dass der Knoten B ein Zielknoten B ist, wobei der Zielknoten B ein Knoten B nach einer S1-Übergabe ist und die Zelle im Zielknoten B, in der die Wiederherstellung der Funkressourcensteuerungsverbindung stattfinden wird, nicht die Zelle ist, in der die Übergabe stattfand, und anschließend zu entscheiden, einen neuen Zugriffsschichtschlüssel zu erzeugen; und einen neuen Zugriffsschichtschlüssel gemäß einem {Next Hop (NH), Next Hop Chaining Count (NCC) } in einer Übergabeanforderungsnachricht zu erzeugen, und den Zugriffsschichtschlüssel als Zugriffsschichtsicherheitsschlüssel zu verwenden, wenn die Funkressourcensteuerungsverbindung (RRC-Verbindung) wiederhergestellt wird;
oder
wobei das erste Beurteilungsmodul (20) ferner konfiguriert ist, um zu beurteilen, dass der Knoten B ein Quellknoten B ist, wobei im Quellknoten B kein Sicherheitsproblem vorliegt und ein lokal gespeicherter Next-Hop-Chaining-Count-Wert nicht 0 ist, und anschließend zu entscheiden, dass kein neuer Zugriffsschichtschlüssel erzeugt werden muss; und unter Verwendung einer vorherigen Sicherheitskonfiguration eine lokale Konfiguration durchzuführen;
oder
wobei das erste Beurteilungsmodul (20) ferner konfiguriert ist, um zu beurteilen, dass der Knoten B ein Quellknoten B ist, wobei ein Sicherheitsproblem im Quellknoten B vorliegt oder ein lokal gespeicherter Next-Hop-Chaining-Count-Wert 0 ist, und anschließend zu entscheiden, einen neuen Zugriffsschichtschlüssel zu erzeugen; und eine Schlüsselableitungsfunktion (KDF) aufzurufen, indem ein aktueller KeNB oder ein neuer Next Hop (NH), eine ID einer physikalischen Zielzelle (PCI) und eine Downlink-Frequenz der physischen Zielzelle (EARFCN-DL) verwendet werden, und einen neuen Zugriffsschichtstammschlüssel K*_{eNB} zu erzeugen und anschließend einen Next-Hop-Chaining-Count-Wert lokal zu speichern, der dem K*_{eNB} entspricht, und den K*_{eNB} als KeNB zu speichern, wenn die Funkressourcensteuerungsverbindung lokal wiederhergestellt wird.

6. Vorrichtung zum Verarbeiten eines Sicherheitsschlüssels, wenn die Funkressourcensteuerungsverbindung wiederhergestellt wird, nach Anspruch 5, **dadurch gekennzeichnet, dass** die Vorrichtung ferner umfasst:
ein zweites Beurteilungsmodul (40), das so konfiguriert ist, dass der Knoten B beurteilt, dass der Knoten B selbst ein Quellknoten B oder ein Zielknoten B ist, je nachdem, ob eine Knoten-ID, die einer ID einer physikalischen Zelle entspricht, die in der empfangenen Anforderung zur Wiederherstellung einer Funkressourcensteuerungsverbindung transportiert wurde, mit der ID des Knotens B identisch ist.

7. System zum Verarbeiten eines Sicherheitsschlüssels, wenn eine Funkressourcensteuerungsverbindung wiederhergestellt wird, umfassend die Vorrichtung nach Anspruch 5 oder 6 und ein Benutzergerät.

## Revendications

1. Procédé de traitement d'une clé de sécurité lorsqu'une connexion de contrôle de ressources radio est rétablie, comprenant les étapes suivantes:
recevoir (S1) une demande de rétablissement de connexion de contrôle de ressources radio à partir d'un équipement utilisateur par un noeud B ;
le noeud B déterminant (S2) s'il est nécessaire de produire une nouvelle clé de sécurité de couche d'accès partagée entre l'eNB et l'UE et produisant (S2) la nouvelle clé de sécurité de couche d'accès ou utilisant une clé de sécurité de couche d'accès initiale basée sur ce résultat de détermination ; et
envoyer (S3) des informations de rétablissement de connexion de contrôle de ressources radio correspondantes à l'équipement utilisateur par le noeud B, de sorte que l'équipement utilisateur effectue le rétablissement de la connexion,
dans lequel
l'étape (S2) au cours de laquelle le noeud B détermine s'il est nécessaire de produire une nouvelle clé de sécurité de couche d'accès et produit la nouvelle clé de sécurité de couche d'accès ou utilise une clé de sécurité de couche d'accès initiale sur la base de ce résultat de détermination comprend :
la détermination que le noeud B est un noeud B cible, une cellule dans le noeud B cible où le rétablissement de la connexion de contrôle de ressources radio aura lieu étant une cellule dans laquelle un transfert a eu lieu, puis la détermination qu'il n'est pas nécessaire de produire une nouvelle clé de couche d'accès ; et
le noeud B utilisant une clé de couche d'accès obtenue pendant le transfert en tant que clé de couche d'accès pour le rétablissement en cours et effectuant une configuration locale en utilisant une configuration de sécurité existant lors du transfert ;
ou
la détermination que le noeud B est un noeud B cible, le noeud B cible étant un noeud B après un transfert X2 et la cellule dans le noeud B cible où le rétablissement de la connexion de contrôle de ressources radio aura lieu n'étant pas la cellule où le transfert a eu lieu, puis la détermination de produire une nouvelle clé de couche d'accès ; et
le noeud B cible sélectionnant une clé K*_{eNB} correspondant à une cellule où la connexion de contrôle de ressources radio est rétablie à partir d'une liste de clés qui est acheminée dans un message de demande de transfert et utilisée pour rétablir la connexion de contrôle de ressources radio, puis utilisant la clé sélectionnée en tant que clé racine de couche d'accès K_{eNB} lorsque la connexion de contrôle de ressources radio est rétablie ;
ou
la détermination que le noeud B est un noeud B cible, le noeud B cible étant un noeud B après un transfert S1 et la cellule dans le noeud B cible où le rétablissement de la connexion de contrôle de ressources radio aura lieu n'étant pas la cellule où le transfert a eu lieu, puis la détermination de produire une nouvelle clé de couche d'accès ; et
le noeud B cible produisant la nouvelle clé de couche d'accès selon {saut suivant, NH, compte de chaînage de saut suivant NCC} dans un message de demande de transfert et utilisant la clé de couche d'accès en tant que clé de sécurité de couche d'accès lorsque la connexion de contrôle de ressources radio (RRC) est rétablie ;
ou
la détermination que le noeud B est un noeud B source, aucun problème de sécurité n'existant dans le noeud B source et une valeur de compte de chaînage de saut suivant sauvegardée localement n'étant pas 0, puis la détermination qu'il n'est pas nécessaire de produire une nouvelle clé de couche d'accès ; et
le noeud B réalise une configuration locale à l'aide d'une configuration de sécurité précédente ;
ou
la détermination que le noeud B est un noeud B source, un problème de sécurité existant dans le noeud B source ou une valeur de compte de chaînage de saut suivant sauvegardée localement étant 0, puis la détermination de produire une nouvelle clé de couche d'accès ; et
le noeud B invoquant une fonction de dérivation de clé (KDF) à l'aide d'une K_{eNB} actuelle ou d'un nouveau saut suivant, NH, d'un ID de cellule physique cible, PCI, et d'une fréquence en liaison descendante de cellule physique cible, EARFCN-DL, et produisant une nouvelle clé racine de couche d'accès K*_{eNB}, puis sauvegardant une valeur de compte de chaînage de saut suivant correspondant à la K*_{eNB} en local et enregistrant la K*_{eNB} en tant que K_{eNB} lorsque la connexion de contrôle de ressources radio est rétablie en local.

2. Procédé de traitement de la clé de sécurité lorsque la connexion de contrôle de ressources radio est rétablie selon la revendication 1, **caractérisé en ce que**, après que le noeud B envoie (S3) des informations de rétablissement de connexion de contrôle de ressources radio correspondantes à l'équipement utilisateur, le procédé comprend en outre :
la réception des informations de rétablissement de connexion de contrôle de ressources radio à partir du noeud B par l'équipement utilisateur ; et
l'équipement utilisateur produit des informations d'achèvement de rétablissement de connexion de contrôle de ressources radio correspondantes conformément aux informations de rétablissement de connexion de contrôle de ressources radio reçues à partir du noeud B et envoie les informations d'achèvement de rétablissement de connexion de contrôle de ressources radio au noeud B.

3. Procédé de traitement de la clé de sécurité lorsque la connexion de contrôle de ressources radio est rétablie selon la revendication 2, **caractérisé en ce que**, avant que l'équipement utilisateur reçoive les informations de rétablissement de la connexion de contrôle de ressources radio à partir du noeud B, le procédé comprend en outre :
l'équipement utilisateur détermine, selon un résultat de comparaison entre la valeur de compte de chaînage de saut suivant contenue dans les informations de rétablissement de connexion de contrôle de ressources radio reçues et la valeur de compte de chaînage de saut suivant sauvegardée localement par l'équipement utilisateur, s'il est nécessaire ou non de produire de manière correspondante une nouvelle clé de sécurité de couche d'accès identique à celle au niveau du côté du noeud B, effectue la configuration locale et produit les informations d'achèvement de rétablissement de la connexion de contrôle de ressources radio correspondantes.

4. Procédé de traitement d'une clé de sécurité lorsque la connexion de contrôle de ressources radio est rétablie selon la revendication 1, **caractérisé en ce que** le procédé comprend en outre :
si un ID de noeud correspondant à un ID de cellule physique acheminé dans la demande de rétablissement de connexion de contrôle de ressources radio est identique à l'ID du noeud B, le noeud B est un noeud B source, dans lequel le noeud B source est le noeud B connecté à l'équipement utilisateur avant que l'équipement utilisateur n'envoie la demande de rétablissement de connexion de contrôle de ressources radio ; et
si l'ID de noeud correspondant à l'ID de cellule physique acheminé dans la demande de rétablissement de connexion de contrôle de ressources radio n'est pas identique à l'ID du noeud B, le noeud B est un noeud B cible, dans lequel le noeud B cible est le noeud B qui a terminé le transfert X2 ou le transfert S1 après réception des informations de demande de rétablissement de connexion de contrôle de ressources radio.

5. Appareil permettant de traiter une clé de sécurité lorsqu'une connexion de contrôle de ressources radio est rétablie, comprenant :
un module de réception (10) configuré pour qu'un noeud B reçoive une demande de rétablissement de connexion de contrôle de ressources radio à partir d'un équipement utilisateur ;
un premier module de détermination (20) configuré pour que le noeud B détermine s'il est nécessaire de produire une nouvelle clé de sécurité de couche d'accès partagée entre l'eNB et l'UE et produire la nouvelle clé de sécurité de couche d'accès ou utiliser une clé de sécurité de couche d'accès initiale sur la base de ce résultat de détermination ; et
un module d'envoi (30) configuré pour que le noeud B envoie des informations de rétablissement de connexion de contrôle de ressources radio correspondantes à l'équipement utilisateur, de sorte que l'équipement utilisateur effectue le rétablissement de la connexion,
dans lequel le premier module de détermination (20) est en outre configuré pour déterminer que le noeud B est un noeud B cible, une cellule du noeud B cible où le rétablissement de connexion de contrôle de ressources radio aura lieu étant une cellule où un transfert a eu lieu, puis pour déterminer qu'il n'est pas nécessaire de produire une nouvelle clé de couche d'accès ; et le noeud B utilise une clé de couche d'accès obtenue pendant le transfert en tant que clé de couche d'accès pour le rétablissement en cours, puis effectue une configuration locale à l'aide d'une configuration de sécurité existant lors du transfert ;
ou
dans lequel le premier module de détermination (20) est en outre configuré pour déterminer que le noeud B est un noeud B cible, le noeud B cible étant un noeud B après un transfert X2 et la cellule dans le noeud B cible où le rétablissement de la connexion de contrôle de ressources radio aura lieu n'étant pas la cellule où le transfert a eu lieu, puis pour déterminer de produire une nouvelle clé de couche d'accès ; et sélectionner une clé K*_{eNB} correspondant à une cellule où la connexion de contrôle de ressources radio est rétablie à partir d'une liste de clés qui est acheminée dans un message de demande de transfert et utilisée pour rétablir la connexion de contrôle de ressources radio et utiliser la clé sélectionnée comme une clé racine de couche d'accès (KeNB) lorsque la connexion de contrôle de ressources radio est rétablie ;
ou
dans lequel le premier module de détermination (20) est en outre configuré pour déterminer que le noeud B est un noeud B cible, le noeud B cible étant un noeud B après un transfert S1 et la cellule dans le noeud B cible où le rétablissement de la connexion de contrôle de ressources radio aura lieu n'étant pas la cellule où le transfert a eu lieu, puis pour déterminer de produire une nouvelle clé de couche d'accès ; et produire la nouvelle clé de couche d'accès conformément à {saut suivant (NH), compte de chaînage de saut suivant (NCC)} dans un message de demande de transfert et utiliser la clé de couche d'accès en tant que clé de sécurité de couche d'accès lorsque la connexion de contrôle de ressources radio (RRC) est rétablie ;
ou
dans lequel le premier module de détermination (20) est en outre configuré pour déterminer que le noeud B est un noeud B source, aucun problème de sécurité n'existant dans le noeud B source et une valeur de compte de chaînage de saut suivant sauvegardée localement n'étant pas 0, puis pour déterminer qu'il n'est pas nécessaire de produire une nouvelle clé de couche d'accès ; et réaliser une configuration locale à l'aide d'une configuration de sécurité précédente ;
ou
dans lequel le premier module de détermination (20) est en outre configuré pour déterminer que le noeud B est un noeud B source, un problème de sécurité existant dans le noeud B source ou une valeur de compte de chaînage de saut suivant sauvegardée localement étant 0, puis pour déterminer de produire une nouvelle clé de couche d'accès ; et invoquer une fonction de dérivation de clé (KDF), en utilisant une KeNB actuelle ou un nouveau saut suivant (NH), un ID de cellule physique cible (PCI) et une fréquence en liaison descendante de cellule physique cible (EARFCN-DL) et produire une nouvelle clé racine de couche d'accès (K*eNB), puis sauvegarder une valeur de compte de chaînage de saut suivant correspondant à la K*_{eNB} en local et enregistrer la K*_{eNB} en tant que KeNB lorsque la connexion de contrôle de ressources radio est rétablie en local.

6. Appareil permettant de traiter une clé de sécurité lorsque la connexion de contrôle de ressources radio est rétablie selon la revendication 5, **caractérisé en ce que** l'appareil comprend en outre :
un second module de détermination (40) configuré pour que le noeud B détermine que le noeud B lui-même est un noeud B source ou un noeud B cible si un ID de noeud correspondant à un ID de cellule physique acheminé dans la demande de rétablissement de connexion de contrôle de ressources radio reçue est identique à l'ID du noeud B.

7. Système permettant de traiter une clé de sécurité lorsqu'une connexion de contrôle de ressources radio est rétablie, comprenant l'appareil selon la revendication 5 ou 6 et un équipement utilisateur.
